# EUROPÄISCHE PATENTANMELDUNG

(11) **EP 1 600 275 A1**
(43) Veröffentlichungstag der Anmeldung: **30.11.2005**
(21) Anmeldenummer: 05011166.5
(22) Anmeldetag: 24.05.2005
(51) Int. Cl.: B29C 45/16, B29C 45/14, F21V 3/02, F21V 17/00, F21V 17/10, F21V 17/16, F21V 15/015

(54) **Leuchte für ein Kraftfahrzeug**

(30) Priorität: 29.05.2004 DE 102004026465
(71) Anmelder: DaimlerChrysler AG, 70567 Stuttgart (DE)
(72) Erfinder: Gross, Thomas, 72800 Eningen (DE)

(57) **Zusammenfassung**

Die Erfindung betrifft eine Leuchte, insbesondere eine Heckleuchte, für ein Kraftfahrzeug, mit einer Abdeckscheibe (1), die eine Gehäuseöffnung in Abstrahlrichtung der Leuchte abdeckt. Erfindungswesentlich ist dabei, dass die Abdeckscheibe (1) aus zumindest zwei Abdeckscheibenteilstücken (2, 3) besteht, welche entlang eines Verbindungsbereichs (5) aneinander angespritzt sind und das die Anspritzpunkte (4, 4') der jeweiligen Abdeckscheibenteilstücken (2, 3) im Verbindungsbereich (5) angeordnet sind.

## Beschreibung

Die vorliegende Erfindung betrifft eine Leuchte, insbesondere eine Heckleuchte, für ein Kraftfahrzeug gemäß dem Oberbegriff des Anspruchs 1.

Herkömmliche Leuchten für Kraftfahrzeuge, beispielsweise Heckleuchten, weisen üblicherweise eine Abdeckscheibe auf, die eine Gehäuseöffnung der Leuchte in Abstrahlrichtung abdeckt. Eine derartige Abdeckscheibe ist dabei oftmals als Spritzgussteil aus Kunststoff hergestellt. Ein Anspritzen, d.h. ein Herstellen der Abdeckscheiben, wird hierbei üblicherweise mittels eines Film- oder eines Heißkanalangusses ausgeführt. Der Anspritzpunkt befindet sich dabei an einer Außenkante der Abdeckscheibe und wird durch einen länglichen Anguss befüllt. Dieser längliche Anguss muss nach dem Spritzvorgang und nach dem Entnehmen des Spritzlings aus dem Spritzwerkzeug nachbearbeitet, insbesondere entgratet, werden, wodurch zusätzliche Kosten entstehen.

Im Unterschied zum Filmanguss erfolgt ein Heißkanalanguss üblicherweise mittig in Bezug auf die Abdeckscheibe. Der Anspritzpunkt ist dabei durch ein dünnes Fadenkreuz erkennbar. Nachteilig ist hierbei, dass direkt am Anspritzpunkt Schlieren erkennbar sein können und gleichzeitig die Temperaturbeständigkeit des Abdeckscheibenwerkstoffes herabgesetzt ist. Dies ist insbesondere dann ungünstig, wenn dieser Anspritzpunkt in der Flucht des Brennpunktes einer Glühlampe liegt und dadurch an diesem ein Temperaturmaximum auftritt.

Aus der DE 198 58 183 C1 sind ein Verfahren und eine Vorrichtung zum Spritzgießen von ein-, zwei- oder mehrfarbigen Kunststoffteilen bekannt. Die Vorrichtung weist dabei eine Matrize, zwei gegeneinander auswechselbare Kerne und Schieber auf. Hierbei bildet der zunächst eingesetzte erste Kern mit der Matrize einen ersten Formhohlraum zum Spritzen des helleren, insbesondere transparenten, Bereichs als Vorspritzling. Der als nächstes einsetzbare zweite Kern bildet mit der Matrize und dem Vorspritzling einen zweiten Formhohlraum für den dunkleren Bereich des Kunststoffteils und berührt dabei den Vorspritzling nur in einem schmalen Randstreifen um den zweiten Formhohlraum herum. Hierdurch kann die Bildung von Auswaschungen und das Erscheinungsbild störenden Schiebermarkierungen reduziert werden.

Die vorliegende Erfindung beschäftigt sich mit dem Problem, für eine Leuchte eingangs erwähnter Art eine verbesserte Ausführungsform anzugeben, bei welcher insbesondere obengenannte Nachteile bezüglich des Anspritzpunktes vermieden werden können.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Leuchte, insbesondere bei einer Heckleuchte, für ein Kraftfahrzeug, welche eine Gehäuseöffnung in Abstrahlrichtung der Leuchte abdeckende Abdeckscheibe aufweist, diese aus zumindest zwei Abdeckscheibenteilstücken auszubilden, welche entlang eines Verbindungsbereichs aneinander angespritzt sind.

Die Anspritzpunkte der jeweiligen Abdeckscheibenteilstücke sind dabei im Verbindungsbereich angeordnet.

Die Anspritzpunkte der jeweiligen Abdeckscheibenteilstücke sind somit aus dem für die Lichtfunktion der Leuchte kritischen Bereich herausverlegt und an einem lichttechnisch nahezu bedeutungslosen Randbereich der jeweiligen Abdeckscheibenteilstücke angeordnet. Am Anspritzpunkt auftretende Schlieren und/oder Werkstoffverwirbelungen haben somit keinen lichttechnischen Einfluss mehr und stellen dadurch nahezu keine Beeinträchtigung der Lichtfunktion dar. Gleichzeitig entfällt ein aufwändiges Nacharbeiten, insbesondere ein aufwändiges Entgraten, der Anspritzpunkte da diese nunmehr in einen bei fertiggestelltem Scheinwerfer von außen nicht sichtbaren Bereich verlegt sind. Die Erfindung bietet somit den Vorteil, die lichttechnischen Eigenschaften zu verbessern und gleichzeitig Zeit- und Kostenvorteile aufgrund einer nicht mehr erforderlichen Nacharbeitung, zu realisieren.

Zweckmäßig ist bzw. sind im oder am Verbindungsbereich eine Spange und/oder eine Blende zur optischen Trennung der benachbarten Abdeckscheibenteilstücke angeordnet. Der Verbindungsbereich, in welchem auch die jeweiligen Anspritzpunkte der dort aneinander grenzenden Abdeckscheibenteilbereiche angeordnet sind, kann so von außen nicht sichtbar durch die Blende abgedeckt werden, wodurch eventuelle Schlieren und/oder Werkstoffverwirbelungen an den Anspritzpunkten nicht mehr zu sehen sind. Gleichzeitig dient die Spange und/oder die Blende als Designelement, wodurch besondere designerische Effekte erreicht werden können und beispielsweise unterschiedliche Fahrzeuglinien durch Einsetzen unterschiedlicher Spangen und/oder Blenden voneinander abgegrenzt werden können. Hierzu ist denkbar, dass die Blende und/oder die Spange in einer Wagenfarbe lackiert oder verchromt ist. So können beispielsweise Leuchten der Oberklasse eine verchromte Spange und eine in Wagenfarbe lackierte Blende aufweisen, wogegen bei einer preislich darunter eingestuften Fahrzeuglinie sowohl die Blende als auch die Spange in Wagenfarben lackiert sein können.

Gemäß einer vorteilhaften Ausführungsform der Erfindung bildet der Verbindungsbereich eine zumindest reduziert lichtdurchlässige Grenze zwischen zwei aneinander angespritzten Abdeckscheibenteilstücken. Hierdurch wird ein Lichtübertrag zwischen zwei aneinander angespritzten Abdeckscheibenteilstücken nahezu unterbunden, so dass unterschiedlichen und benachbarten bzw. aneinander angrenzenden Abdeckscheibenteilstücken unterschiedliche Lichtfunktionen, wie beispielsweise ein Rückfahrlicht und ein Bremslicht, zugewiesen werden können.

Gemäß einer weiteren vorteilhaften Ausführungsform ist/sind die Blende und/oder die Spange über einen, insbesondere lösbaren, Clipverschluss an der Abdeckscheibe verrastet. Hierdurch lassen sich die Blende und/oder die Spange besonders einfach und wartungsfreundlich von der Abdeckscheibe lösen bzw. daran anbringen, wodurch im Reparatur- und/oder Wartungsfall Kosten- und Zeitvorteile realisiert werden können. Darüber hinaus ist denkbar, dass Blenden und/oder Spangen unterschiedlicher Ausführungsformen als Nachrüstteile über den Zubehörhandel angeboten werden können, so dass ein jeweiliger Fahrzeugeigentümer individuelle Blenden und/oder Spangen durch ein einfaches Verrasten an der Abdeckscheibe anbringen kann.

Vorteilhafter Weise kann vorgesehen sein, dass die Spange und/oder die Blende bündig mit einer Abdeckscheibenaußenfläche angeordnet sind. Dies ermöglicht eine im wesentlichen fluchtende Außenoberfläche der Abdeckscheibe bzw. der Leuchte und liefert dadurch einen designerischen Vorteil gegenüber herkömmlichen Abdeckscheiben. Um das bündige Abschließen der Spange bzw. der Blende mit der Abdeckscheibenaußenfläche zu bewirken, kann gemäß einer weiteren besonders bevorzugten Ausführungsform der Verbindungsbereich nach innen versetzt sein. Durch den somit im Querschnitt der Abdeckscheibe entstehenden Verlaufsknick im Verbindungsbereich, kann neben einer Aufnahme für die Blende bzw. die Spange eine Aussteifung der Abdeckscheibe erreicht werden, wodurch sich deren Formtreue erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Dabei zeigen, jeweils schematisch,
- Fig. 1: eine Ansicht auf eine erfindungsgemäße Leuchte,
- Fig. 2: eine Darstellung wie in Fig. 1, jedoch im Querschnitt,
- Fig. 3: eine Explosionsdarstellung der erfindungsgemäßen Leuchte mit einer Spange und einer Blende.

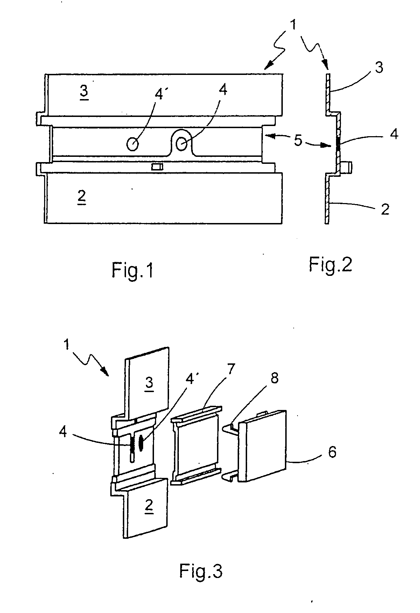

Entsprechend Fig. 1 weist eine Abdeckscheibe 1 einer im übrigen nicht dargestellten Leuchte, beispielsweise einer Heckleuchte für ein Kraftfahrzeug, zumindest zwei Abdeckscheibenteilstücke 2 und 3 auf, welche jeweils einer separaten Lichtfunktion, beispielsweise einem Bremslicht und einem Rückfahrlicht, zugewiesen sind. Die Abdeckscheibe 1 deckt dabei beispielsweise eine Gehäuseöffnung der Leuchte in Abstrahlrichtung ab und kann als Kunststoffspritzgussteil in bekannter Weise hergestellt werden. Zum Herstellen der Abdeckscheibe werden die farblich oftmals unterschiedlich ausgestaltete Abdeckscheibenteilstücke 2, 3 in einem Spritzgusswerkzeug gespritzt, indem plastisch verformbarer und heißer Kunststoff über einen Anspritzpunkt 4 in eine Spritzgussform des Spritzgusswerkzeugs eingespritzt wird.

Die Abdeckscheibe 1 besteht dabei aus zumindest zwei Abdeckscheibenteilstücken 2, 3, welche entlang eines Verbindungsbereichs 5 aneinander angespritzt sind. Denkbar ist natürlich auch, dass die Abdeckscheibe 1 weitere nicht dargestellte Abdeckscheibenteilstücke aufweist. Wie in Fig. 1 gezeigt, sind die Anspritzpunkte 4, 4' der jeweiligen Abdeckscheibenteilstücke 2, 3 im Verbindungsbereich 5 angeordnet.

Da Anspritzpunkte 4, 4' üblicherweise Materialschwächungen, beispielsweise durch Materialverwirbelungen beim Einspritzvorgang, darstellen und zu dem nachträglich, sofern sie in einem sichtbaren oder die Lichtfunktion der Leuchte 1 beeinträchtigenden Bereich liegen, nachgearbeitet werden müssen, sind diese erfindungsgemäß im Verbindungsbereich 5 angeordnet und beeinflussen somit die Lichtfunktion der Leuchte 1 nicht.

Darüber hinaus kann ein nachträgliches und aufwändiges Entgraten der Anspritzpunkte 4, 4' entfallen, da diese im später durch eine Blende 6 und/oder eine Spange 7 abgedeckten Bereich 5 liegen.

Die Verlagerung der Anspritzpunkte 4, 4' aus dem Abstrahlbereich der Leuchte 1 heraus, bietet darüber hinaus den Vorteil, dass die üblicherweise am Einspritzpunkt 4, 4' auftretenden Schlieren, hervorgerufen beispielsweise durch Werkstoffverwirbelungen während des Einspritzvorgangs, ohne Nachteil auf die Qualität der Leuchte 1 bleiben. Desweiteren kann die Robustheit der Leuchte 1 gesteigert werden, da die im Bereich der Anspritzpunkte 4, 4' herabgesetzte Temperaturbeständigkeit der Abdeckscheibenteilstücke 2, 3 nunmehr einer deutlich geringeren Temperaturbelastung ausgesetzt ist, als dies bei herkömmlichen Leuchten mit mittig und in der Flucht des Brennpunkts der Glühlampe angeordnetem Anspritzpunkt der Fall war.

Generell kann der Verbindungsbereich 5 eine zumindest reduziert lichtdurchlässige Grenze zwischen zwei aneinander angespritzten oder benachbarten Abdeckscheibenteilstücken 2, 3 bilden, so dass benachbarte Abdeckscheibenteilstücke 2, 3 beispielsweise unterschiedliche Farben und unterschiedliche Lichtfunktionen aufweisen können, ohne dass durch eine Lichtübertragung über den Verbindungsbereich 5 hinweg in das jeweils benachbarte Abdeckscheibenteilstück 3 oder 2 eine Beeinträchtigung der benachbarten Lichtfunktion erfolgt.

Gemäß Fig. 2 ist der Verbindungsbereich 5 nach innen versetzt und bildet eine im Querschnitt U-förmige Vertiefung. In dieser U-förmigen Vertiefung, d.h. im oder am Verbindungsbereich 5, kann gemäß Fig. 3 eine Blende 6 und/oder ein Spange 7 zur optischen Trennung der benachbarten Abdeckscheibenteilstücke 2 und 3 angeordnet sein. Je nach Ausführungsform kann dabei vorgesehen sein, die Blende 6 und/oder die Spange 7 in einer Wagenfarbe zu lackieren oder zu verchromen. Hierdurch können beispielsweise unterschiedliche Fahrzeuglinien designerisch unterschieden werden.

Um die Blende 6 und/oder die Spange 7 einfach und schnell an der Abdeckscheibe 1 anzubringen bzw. von dieser zu lösen, kann ein Clipverschluss vorgesehen sein, mit welchem die Blende 6 und/oder die Spange 7 an der Abdeckscheibe 1 verrastet ist/sind. Denkbar ist aber auch, dass die Blende 6 und/oder die Spange 7 zusätzlich oder alternativ mit der Abdeckscheibe 1 verklebt ist/sind. Gemäß der beispielhaft in Fig. 3 gezeigten Ausführungsform weist die Blende 6 Rastnasen 8 auf, welche beispielsweise durch entsprechende nicht dargestellte Öffnungen an der Spange 7 hindurchgreifen und mit nicht ebenfalls gezeigten und komplementär zu den Rastnasen 8 ausgebildeten Rastöffnungen an der Abdeckscheibe 1 verrasten.

Um eine möglichst ästhetische Außenoberfläche der Abdeckscheibe 1 zu erzeugen, kann die Spange 7 und/oder die Blende 6 bündig mit einer Abdeckscheibenaußenfläche abschließen. Denkbar ist natürlich auch eine leicht überstehende oder leicht im Verbindungsbereich 5 versenkte Anordnung der Blende 6 bzw. der Spange 7.

Durch die erfindungsgemäße Lösung, wird erreicht, dass die Anspritzpunkte 4, 4' für jeweils benachbarte und/oder aneinander angespritzte Abdeckscheibenteilstücke 2, 3 in den Verbindungsbereich 5 verlegt sind und dadurch die lichttechnischen Eigenschaften der Leuchte nicht negativ beeinflussen können. Darüber hinaus bietet die Anordnung der Anspritzpunkte 4, 4' im Verbindungsbereich 5 unter der Spange 7 bzw. der Blende 6 den Vorteil, dass die Anspritzpunkte 4, 4' nicht nachträglich, d.h. dem Entfernen des Spritzlings aus dem Spritzgusswerkzeug aufwändig nachbearbeitet werden müssen, wodurch Zeit- und Kostenvorteile realisiert werden können. Im Unterschied zu herkömmlichen Leuchten, bei welchem die Anspritzpunkte 4, 4' oftmals mittig in Bezug auf die Lichtfunktion an der Abdeckscheibe 1 angeordnet sind, bietet die erfindungsgemäße Lösung darüber hinaus den Vorteil, dass die an sich temperaturempfindlicheren Anspritzpunkte 4 nicht mehr im direkten Anstrahlbereich einer Glühlampe bzw. einer Lichtquelle liegen und somit die Temperaturbelastung reduziert werden kann.

Zusammenfassend lassen sich die wesentlichen Merkmale der erfindungsgemäßen Lösung wie folgt charakterisieren:

Die Erfindung sieht bei einer Leuchte, insbesondere bei einer Heckleuchte eines Kraftfahrzeugs, mit einer Abdeckscheibe 1 vor, die Abdeckscheibe 1 aus zumindest zwei Abdeckscheibenteilstücken 2, 3 zu bilden, welche entlang eines Verbindungsbereichs 5 aneinander angespritzt sind. Die Anspritzpunkte 4, 4' der jeweiligen Abdeckscheibenteilstücke 2, 3 sind dabei im Verbindungsbereich 5 und somit außerhalb eines temperaturkritischen oder die Lichtfunktion beeinträchtigenden Bereichs der Leuchte angeordnet. Darüber hinaus sind die Anspritzpunkte 4, 4' durch eine später von außen auf den Verbindungsbereich 5 aufgebrachte Spange 7 bzw. Blende 6 verdeckt und dadurch nicht mehr sichtbar, so dass eine aufwändige und teure Nachbearbeitung entfallen kann.

## Patentansprüche

1. Leuchte, insbesondere Heckleuchte, für ein Kraftfahrzeug, mit einer Abdeckscheibe (1), die eine Gehäuseöffnung in Abstrahlrichtung der Leuchte abdeckt,
**dadurch gekennzeichnet,**
- **dass** die Abdeckscheibe (1) aus zumindest zwei Abdeckscheibenteilstücken (2, 3) besteht, welche entlang eines Verbindungsbereichs (5) aneinander angespritzt sind,
- **dass** Anspritzpunkte (4, 4') der jeweiligen Abdeckscheibenteilstücke (2, 3) im Verbindungsbereich (5) angeordnet sind.

2. Leuchte nach Anspruch 1,
**dadurch gekennzeichnet,**
**dass** unterschiedlichen Abdeckscheibenteilstücken (2, 3) unterschiedliche Beleuchtungsfunktionen zugeordnet sind.

3. Leuchte nach Anspruch 1 oder 2,
**dadurch gekennzeichnet,**
**dass** der Verbindungsbereich (5) nach innen versetzt ist.

4. Leuchte nach einem der Ansprüche 1 bis 3,
**dadurch gekennzeichnet,**
**dass** im oder am Verbindungsbereich (5) eine Spange (7) und/oder eine Blende (6) zur optischen Trennung der benachbarten Abdeckscheibenteilstücke (2, 3) angeordnet ist.

5. Leuchte nach Anspruch 4,
**dadurch gekennzeichnet,**
**dass** die Blende (6) und/oder die Spange (7) in einer Wagenfarbe lackiert oder verchromt ist.

6. Leuchte nach einem der Ansprüche 1 bis 5,
**dadurch gekennzeichnet,**
**dass** der Verbindungsbereich (5) eine zumindest reduziert lichtdurchlässige Grenze zwischen zwei aneinander angespritzten Abdeckscheibenteilstücken (2, 3) bildet.

7. Leuchte nach einem der Ansprüche 1 bis 6,
**dadurch gekennzeichnet,**
- **dass** die Blende (6) und/oder die Spange (7) über einen Clipverschluss an der Abdeckscheibe (1) verrastet ist/sind und/oder
- **dass** die Blende (6) und/oder die Spange (7) zusätzlich oder alternativ mit der Abdeckscheibe (1) verklebt ist/sind.

8. Leuchte nach einem der Ansprüche 1 bis 7,
**dadurch gekennzeichnet,**
**dass** die Blende (6) über einen Clipverschluss an der Spange (7) verastet ist.

9. Leuchte nach einem der Ansprüche 1 bis 8,
**dadurch gekennzeichnet,**
**dass** zumindest ein Abdeckscheibenteilstück (2, 3) der Abdeckscheibe (1) als Kunststoffspritzgussteil hergestellt ist.

10. Leuchte nach einem der Ansprüche 1 bis 9,
**dadurch gekennzeichnet,**
**dass** die Spange (7) und/oder die Blende (6) bündig mit einer Abdeckscheibenaußenfläche angeordnet sind.
